Europäisches Patentamt

European Patent Office

Office européen des brevets

(11) Publication number: **0 259 973**
**A2**

## (12) EUROPEAN PATENT APPLICATION

(21) Application number: **87306993.4**

(22) Date of filing: **06.08.87**

(51) Int. Cl.⁴: **G01K 11/20**

(30) Priority: **10.09.86 US 905798**

(43) Date of publication of application:
**16.03.88 Bulletin 88/11**

(84) Designated Contracting States:
**DE FR GB IT NL**

(71) Applicant: **Shulze, John E.**
**1450 Corte de Prima Vera**
**Thousand Oaks, California 91360(US)**

(72) Inventor: **Shulze, John E.**
**1450 Corte de Prima Vera**
**Thousand Oaks, California 91360(US)**

(74) Representative: **Fisher, Bernard et al**
**Raworth, Moss & Cook 36 Sydenham Road**
**Croydon Surrey CR0 2EF(GB)**

(54) **Fluorometric sensor system using heterodyne technique.**

(57) A fluorometric sensor system including a modulated light source for exciting a probe at the distal end of a fiber optic equipped catheter. A fluoroescent output from the probe is time delayed with respect to the modulated light source. A phase shift is determined based upon this time delay and provides an indication of the fluorescent lifetime of the probe. This lifetime measure is functionally related to a fluid concentration or temperature at the distal end of the catheter.

Fig.1

## Fluorometric Sensor System Using Heterodyne Technique

### Technical Field

This invention relates to photoluminescent indicators and in particular to a fluorometric sensor system for measuring oxygen pressure or temperature at the tip of a fiber optic-equipped catheter in an organ or a body.

### Background Art

It has been long known that many photoluminescent materials exhibit substantial reductions in their luminescent intensities or luminescent decay lifetimes as a result of increases in the temperature of the material. These characteristics have been exploited in the development of various fiber optic temperature sensor probes. See URBACH, U.S. Patent No. 2,551,650, SAMULSKI, U.S. Patent Nos. 4,437,772, 4,245,507 and QUICK, U.S. Patent No. 4,223,226, WICKERSHEIM, et al., RECENT ADVANCES IN OPTICAL TEMPERATURE MEASUREMENT, Industrial Research & Development - Dec. 1979, and Sholes, et al. FLUORESCENT DECAY THERMOMETER WITH BIOLOGICAL APPLICATIONS, Rev. Sci. Instrum., 51, 7, Jul. 1980.

For some luminescent materials, "quenching" (i.e. - reductions in luminescent intensity) due to the presence of the oxygen molecule (see BERGMAN, Rapid-response Atmospheric Oxygen Monitor based on Fluorosence Quenching, Nature 218, 396, April 1968; STEVENS, U.S. Patent No. 3,612,866, LUBBERS, U.S. Patent Re. 31, 879, PETERSON U.S. Patent No. 4,476,870, and COX, "Detection of 02 by fluorescence quenching", Applied Optics 24, 14 1985) has been exploited for the construction of fluorometric probes.

Further, the presence of the hydrogen ion can sensitivity quench some luminescent materials (see LUBBERS U.S. Patent Re. 31,879, and SAARI, et al., "pH sensor based on immobilized fluoresceinamine", Anal. Chem. 1982, 54, 821-3), as can a variety of other chemical quenching species, such that it is possible to measure the concentrations of such quenching species via "fluorometric sensors". (for example see HARTE, U.S. Patent No. 3,992,631).

Generally, it can be stated that fluorescence quenching (i.e. using reductions in intensity of emission of a photoluminescent material to measure concentration of a quenching species) is a well established methodology in analytical chemistry.

However, direct measurement of the photoluminescent lifetimes of those materials suitable or useful for assay of chemical species such as the oxygen molecule or hydrogen ion or other blood gasses has generally been reserved for the research laboratory, and such techniques have not been used in the field of fiber optic sensors which are placed in a remote environment such as the body. This has been true for several reasons: (1) The photoluminescent lifetimes of suitable materials is generally quite short. For instance, Lubbers teaches the use of Parylene Dibutyric Acid and Beta Methyl Umbelliferone; and Cox, the use of 9,10 Diphenyl Anthracene. Other examples are cited in the referenced prior art. The photoluminescent lifetime of such species is on the order of 10 nanoseconds, and generally with required excitation wavelengths in the ultraviolet. In order to accomplish lifetime measurements on such species a large, expensive excitation light source gas been provided such as a gas ion laser or gas discharge lamp with internal or external modulation capabilities in the nanosecond (Gigahertz) range. (2) Photo sensor systems for detecting and analyzing such high speed luminescent decays whether by direct pulse contour analysis (see Lackowicz, Principles of Fluorescence Spectroscopy, Chapter 3, Plenum Press, New York 1983, and Gafni, et al., ANALYSIS of Fluorescence Decay Curves by Means of the Laplace Transformation, Biophysical Journal, 15, 1975), or by analysis of the emitted luminescent response to a modulated excitation source (see Lackowicz, Chapter 3 & 4; Gratton, et al., A continuously Variable Frequency Cross-Correlation Phase Fluorometer with Picosecond Resolution, Biophysical Journal, 44, Dec. 1983; Lytle, et al., Spectroscopic Excitation Source with Variable Frequencies and Shapes of Modulation, Anal. Chem. 47, 3, 1975; Hauser, et al., Phase Fluorometer with a continuously variable frequency, Rev. Sci. Instrum., 46, 4, 1975, and Birks, et al., Phase and Modulation fluorometer, J. Sci. Instruments, 38, July 1961) are again expensive and bulky, and subject to considerable detection errors as a result of minor changes in the pulse shape or modulation characteristic of the light source.

As a result of the foregoing size, sophistication, and expense of laboratory lifetime measurement apparatus, prevous workers in the field of catheter-based fiber optic sensing systems for the detection of oxygen and other fluid components in the body have relied upon the measurement of quenching - i.e., the reduction in average luminescent intensity of the fluorometric sensor due to the presence of the quenching fluid component upon application of a precisely regulated, continous source of excitation light. However, there are definite advantages to the measurement of luminescent lifetimes as opposed to quenching intensities in the field of catheter-based fiber optic sensors:

(1) Flexing of the catheter and fiber optic as normally occurs in catheter applications causes a reduction in quench intensity which can be interpreted by the user as a change in the quencher concentration at the tip of the catheter.

Lifetime measurement, which is not dependent on the absolute intensity of luminescence transmitted through the fiber optic light pipe, does not suffer from this drawback,

(2) A fiber optic sensor probe employing lifetime measurements could be easily disconnected and reconnected to a lifetime measurement apparatus without concern for recalibration of the apparatus due to changes in the attenuations of the often intervening fiber optic connector. This is a significant practical advantage in critically ill patients who undergo many tests and procedures.

(3) During operation, a fluorometric sensor normally suffers some reduction in luminescent intensity output due to photo-destruction of the luminescent material by the incident light source. This sensor "drift," in an intensity measurement system, can be interpreted by the user as an increase in quencher concentration at the tip of the catheter. Lifetime measurement systems do not suffer from "drift" due to slow photo-destruction or bleaching of the luminescent material since they are not sensitive to quench intensity variations.

U.S. Patent No. 3,548,296 employs phase detectors to control the amplitude and phase of a periodic signal source with respect to a reference signal.

In an instrument developed by Schmillen (Z. Physik, 135, 294-308, 1953) to measure concentration quenching effects in fluorescent solutions, the light source modulating frequency is increased by 50 Hz in a second oscillator-mixer, the resulting reference signal is mixed with the output from a photomultiplier tube observing the fluorescent emissions, and the phase of a 50 Hz heterodyne signal relative to the second oscillator signal is measured by visual observation of patterns on a cathode ray tube.

Bailey, et al. (The Determination of the Fluorescence Lifetimes of Dissolved Substances by a Phase Shift Method, J. Chem. Phys., 21, 8, Aug. 1953) describes a phase fluorimeter apparatus for measuring the lifetime of fluorescent solutions, with or without quenchers present; wherein an acousto-optic modulated light source is projected into fluorescent and reference solutions; thereby a reference signal is generated which is further manipulated to have an adjustable, calibrated phase relationship to the modulating light signal, and a phase detector compares the reference channel and fluorescent signal channels. When the phase detector indicates a null or zero condition, the phase adjustment of the reference channel is ascertained and used to determine the lifetime of the sample solution.

Birks, et al., (Photo-Fluorescence Decay Times of Organic Phosphers, Proc. Phys. Soc. LXVI, 10-a, 1953.) simplify the apparatus of Bailey by substituting a gas discharge light source, a gain-modulated photomultiplier tube, and by using various lengths of coaxial cable to introduce an adjustable phase delay into the reference channel. The apparatus is used to measure the changes in fluorescence lifetime of anthracene crystals due to reabsorption effects.

VENETTA (Microscope Phase Fluorometer for Determining the Fluoresence Lifetime of Fluorochromes, Rev. Sci. Instrum., 30, 6, 1959.) adapts the apparatus of Bailey to a microscope phase fluorometer.

Muller, et al. (High Performance Phase Fluorometer Constructed from Commercial Subunits, Rev. Sci. Instrum., 36,8, Aug. 1965) assembled an apparatus similar to that of Bailey from commercially available components.

Spencer and Weber (Measurements of Subnanosecond Fluorescence Lifetimes with a Cross-Correlatoin Phase Fluorometer, Ann. N.Y. Acad. Sci., 158, 361-376, 1969.) report the construction of phase fluorometer using a "cross-correlation" technique. The fluorometer is used for measuring the variations in lifetime of fluorescein in the presence of potassium iodide. A secondary modulating frequency and a phase reference pulse are obtained via a special rotating capacitor, electricity connected to the primary modulating signal, and having one rotating plate which continuously varies the phase of the second modulating signal relative to the first.

In an article entitled "Phase fluorimetry with a variable duty cycle electrical phosphoroscope," J. of Physics E: Scientific Instuments, 9, 1013-1017, 1976. Gruneis, et al., discloses a mechanically-chopped light source used in conjunction with a synchronized electrically gated photosensor to separate out and measure the decay curve of the relatively long-lived phosphorescence component emanating from luminescent material while eliminating strong short term interference from the light source and from an accompanying fluorescent component emitted from the same material. The area under the remaining long term decay curve is integrated and used with a single-exponent mathematical model to indirectly estimate phosphorescent lifetime.

Sholes (Fluorescent decay thermometer with biological applications, Rev. Sci, Instrum. 51(7), 1980) excites the long-lived fluorescence of a ruby with a short pulse of light and integrates the resulting decay curve to develop a voltage which is said to be related to the temperature of the sensor. Sholes specifically teaches against sampling of the decay curve because of problems with D.C. shift in the amplifier and variations in the light source intensity.

Samulski (U.S. Patent No. 4,245,507) proposes a fiber optic probe for temperature sensing in the human body and recognizes that the sensor's luminescent output could be analyzed via pulse decay of phase shift techniques, but fails to describe how such an analysis system might be constructed.

In U.S. Patent No. 4,374,328, Tekippe describes a fluorescent indicator system for temperature or pressure measurements employing a fiber optic sensor. A reference sample of the fluorescent indicator is sequestered within the instrument in a known temperature or pressure environment. A modulated excitation source is applied to both the fiber optic sensor and the reference sample. By comparing the phase-shift of the luminescent response of the reference sample to that of the sensor, the temperature or pressure in the sensor's environment is determined. An essential element of Tekippe's invention is a feedback means (for example - a temperature controller in the environment of the reference sample) which adjusts the phase of the reference signal in relationship to the modulating signal based upon the output of a phase comparator.

In pending British Patent Application No. 2132348A, Demas, et al. describes a group of organometallic compounds sutiable for use as fluorescent oxygen sensors when embedded in polymer matrixes. Demas discloses that these materials could be used in conjunction with intensity or lifetime analysis techniques for construction of a fiber optic oxygen sensor system for use inside the body. Demas has also described (see Luminescence Spectroscopy and Bimolecular Quenching, J. Chem. Ed., 52, 10, 1975; Luminescence Decay Times and Bimolecular Quenching, J. Chem. Ed., 53, 10, 1976, and Inexpensive Laser Luminescence Decay Time Apparatus, Anal. Chem., 48, 2, 1976) two decay time analysis systems which are said to be inexpensive means for measuring the lifetimes of the referenced organometallics or of other luminescent materials. The first system uses a flashlamp, and the second a pulsed-nitrogen laser to deliver a pulse of excitation light to the luminescent material, whereupon, the resulting luminescent decay is detected and analyzed by graphical methods using a storage oscilloscope.

Each of the foregoing prior art techniques has its own drawback and limitation with respect to construction of fiber optic oxygen sensors for use inside the body and in body fluids, and for an accessory lifetime measurement apparatus.

The fluorometers of Schmillen and Spencer, et al. are not used in conjunction with a remote fluorometric sensor, coupled via fiberoptics, and indeed would be too expensive and bulky for such an application.

In addition, the fluormeters of Bailey, Birks, Venetta, and Muller require the introduction of a precisely known phase shift into the reference channel.

The decay curve integration techniques of Gruneis and Sholes are extremely sensitive to pulse-to-pulse variations in the output intensity of the excitation light source, D.C. drifts of the photosensor, integrator, and amplifier, and slow photodestruction of the fluorometric sensor.

The apparatus of Tekippe requires that a reference sample of the luminescent material be placed inside the instrument in a known environment for the purpose of developing a referenced signal which has an adjustable phase relationship relative to the luminescent response from the sensor. Because photodestruction of many lumi nescent materials would inevitably occur, the appartus would require substantial maintenance. In addition, it is often difficult or impossible to place a reference sample in an environment which is known to be precisely the same as that of the sensor itself. Fluorometric oxygen sensors are affected by both temperature and oxygen variations at the tip of the catheter. An infinite number of combinations of temperature and oxygen pressure could be made to mimic the phase or lifetime response of the sensor to an environment where both oxygen pressure and temperature is unknown.

Further, it would be highly desirable to develop a lifetime analysis system which does not require the production of a feedback-adjustable phase reference signal with it's attendant complexity and cost. The flashlamp apparatus of Demas, because of the long and unpredictable decay characteristic of the flashlamp, required tedious deconvolution of each decay curve and is subject to considerable experimental error. The laser apparatus requires use-to-use maintenance by a skilled technician. Both apparatuses of Demas require tedious curve-tracing techniques, the services of an off-line computer, and are still relatively expensive.

4

## Disclosure of the Invention

It is accordingly an object of the present invention to overcome the difficulties in the prior art. It is a further object of the present invention to provide a fluorometric sensing system employed a dual-modulation heterodyne technique. It is a still further object of the present invention to provide a fluorometric sensor system for analysis of temperature, oxygen, carbon dioxide, or other body fluids based upon luminescent lifetime measurements and employing a fiber-optic equipment catheter. A still further object of the present invention is to provide a relatively inexpensive apparatus for measurement of fluorescence lifetimes outside of the research laboratory.

The invention provides a fluormetric sensor system employing a heterodyne technique, wherein a frequency synthesizer produces two modulating output waveforms having a constant frequency or phase relationship to each other. A first of said waveforms is used to modulate a light source which emits light in the upper portion of the visible or long ultraviolet spectrum, a second of said waveforms is used to modulate the gain of a variable-gain photosensor. A first light path conveys source excitation light from the light source to a bi-directional coupler/connector and a second light path conveys luminescent emissions back from the fluorometric sensor to th bi-directional coupler/connector and then to the variable-gain photosensor. Luminescent emissions are generated by a fluorometric sensor located at or near the tip of a fiber-optic equipped catheter in response to the excitation light. These emissions are indicative of the average luminescent lifetime of the fluorometric sensor. The proximal end of the catheter is in communication with the bi-directional coupler/connector. The frequency synthesizer also generates a timing reference signal which is used in conjunction with the slowly changing signal output of the variable-gain photosensor to determine the luminescent lifetime of the fluorometric sensor. The lifetime is converted to a fluid component concentration at the tip of the catheter and may be displayed on a visual display.

The structure and operation of the invention, together with its objects and advantages will best be understood from the following description of several embodiments when read in conjunction with the accompanying drawings.

## Brief Description of the Drawings

Figure 1 is a block diagram of a fluorometric sensor system according to the present invention;

Figure 2 is a schematic diagram of one embodiment of the invention;

Figure 3 is a schematic diagram of another embodiment of the invention;

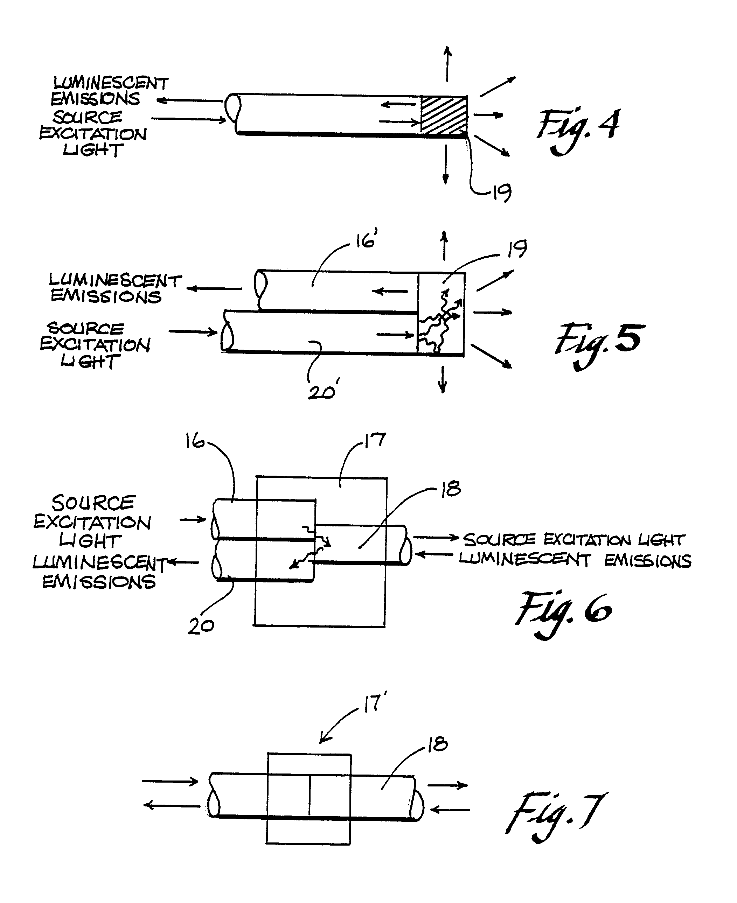

Figure 4 is an enlarged view of one embodiment of the fluorometric sensor according to the present invention;

Figure 5 is an enlarged view of an alternative construction fo the fluormetric sensor according to the present invention;

Figure 6 is an enlarged view of one embodiment of a bi-directional coupler/connector apparatus according to the present invention;

Figure 7 is an enlarged view of another embodiment of a fiber optic coupler apparatus according to the present invention;

Figure 8 is a schematic diagram, in expanded detail, of one embodiment of a frequency synthesizer utilized with the invention; and

Figure 9 is a schematic diagram, in expanded detail, of another frequency synthesizer utilized with the invention.

## Best Mode for Carrying Out the Invention

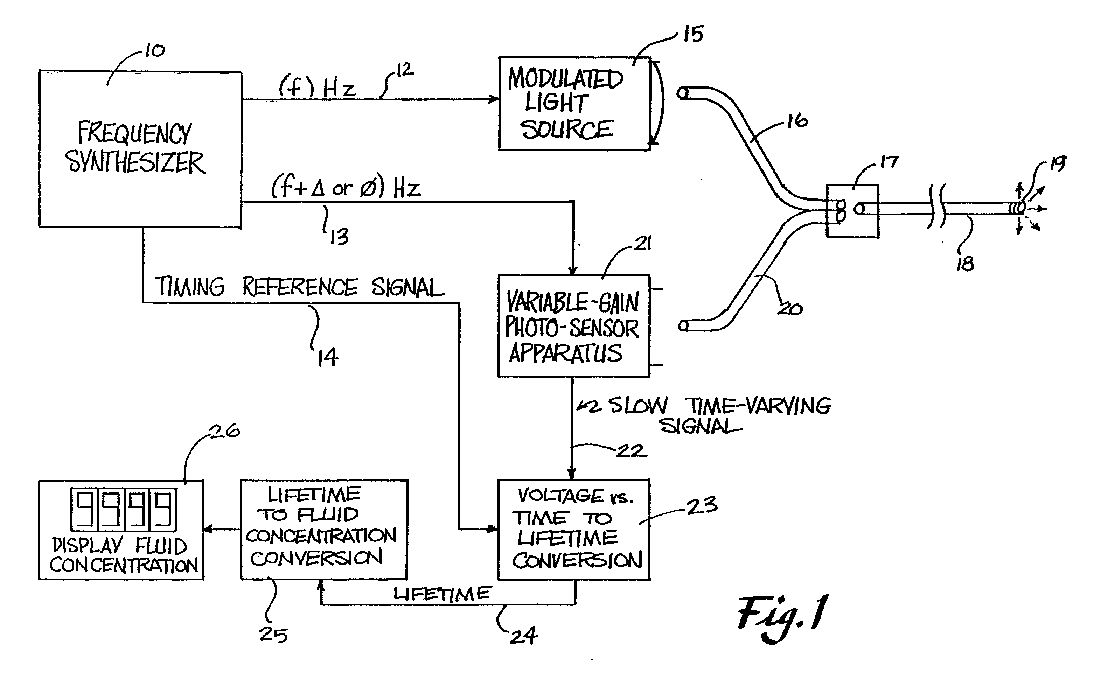

Referring now to Figure 1, there is provided a frequency synthesizer 10 having two outputs 12, 13 for producing two waveforms bearing a constant frequency or phase relationship to one another. The synthesizer 10 also provides a timing reference signal at a third output 14 which is indicative of the relationship between the waveforms at the outputs 12, 13. A waveform at the output 12 is used to excite or modulate the output of a modulated light source 15 is directed via a light path 16, to a bi-directional coupler/connector 17. A portion of the output of the modulated light source 15, is thereby directed into a fiber optic-light pipe equipped catheter 18, where it excites luminescent emissions from a fluorometric sensor 19 located at or near the tip of the catheter. The fluorometric sensor 19 is a luminescent material deposited at or near the tip of the catheter as has been described in the prior art, one of the most suitable types being the fluorophor/polymer matrices described in co-pending U.S. Patent Application Serial No. 881,139, filed July 2, 1986 to Shulze entitled "Sensor System Using Fluorometric Decay Measurements" and in the corresponding European Patent Application No. 87.303362.5. Relevant portions of this application are incorporated herein by reference.

The luminescent emissions are functionally related to the characteristics of the modulating light source 15 and the average lifetime of luminescence of the fluorometric sensor 19. The average lifetime of luminescence, however, is sensitively and substantially reduced by the presence and concentration of a quencher chemical species at the tip of the catheter 18. A portion of the luminescent emissions from the fluorometric sensor are carried, via the catheter's integral light pipe to the bi-directional coupler/connecter 17, whereupon a portion of said luminescent emissions are directed via a second light path 20, to a variable-gain photo-sensor 21. The gain of the photosensor 21 is modulated by a second waveform from the frequency synthesizer output 13.

This modulation produces a slowly time-varying signal at an output 22 of the photo-sensor 21. This slow time-varying signal contains information relating to the lifetime of the fluorometric sensor. The advantage of this "dual-modulation" scheme lies in the fact that the relatively hi-speed luminescence decay phenomena of the fluorometric sensor has been reduced to a slow time-varying signal containing information which can be analyzed by inexpensive voltmeter and time circuits in a voltage vs. time to lifetime conversion circuit 23.

A timing reference signal at the output 14 from the frequency synthesizer 10 characterizes the modulating signals at the outputs 12, 13. The circuit 23 uses this signal in conjunction with the signals at the output of the photosensor 21 for the production of a signal which is indicative of the fluorsence lifetime. An output 24 from the circuit 23 conveys a lifetime signal to a circuit 25 where the lifetime is related to the chemical quencher concentration at the tip of the catheter 18. The circuit 25 takes into consideration the nonlinear characteristics of bi-molecular luminescence quenching, which theoretically follows the Stern-Volmer equation (as is extensively described in the cited references), nonlinearities due to specific fluorometric sensor construction techniques, and the effects of sensor temperature changes (if present). A resulting processing signal is displayed directly as fluid concentration at the tip of the catheter on a display 26.

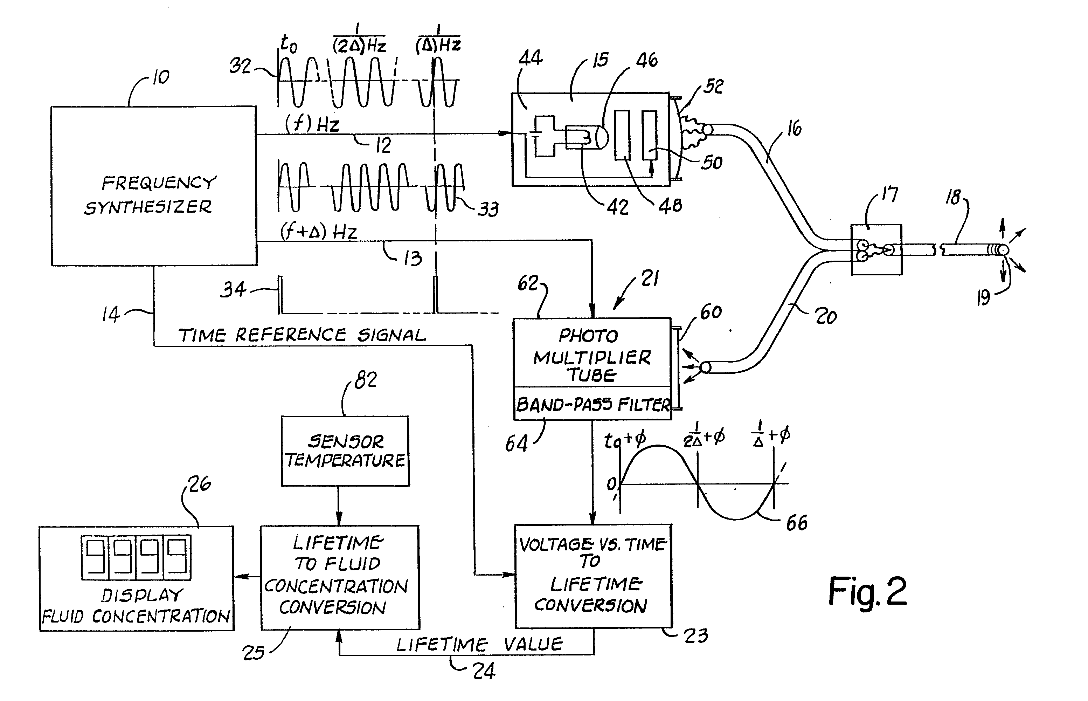

Referring now to Figure 2, which is a more detailed illustration of one embodiment of the present invention, the frequency synthesizer 10 generates two output waveforms 32, 33, at the outputs 12, 13 of slightly differing frequencies (f)Hz and (f + Δ)Hz. For best resolution, the modulating frequency (f) is chosen such that the reciprocal of the circular modulation frequency $2\pi f$ is approximately equal to the midscale fluorescence lifetime of the fluorometric sensor. For example, for an organometallic oxygen sensor having a midscale fluorescence lifetime ($\tau$) of 4 microseconds, the modulating frequency should be approximately:

$$F = \frac{1}{2\pi\tau} = 40,000 \text{ Hz}$$

The choise of an organometallic fluophor/polymer matrix for use as a fluorometric sensor for the measurement of oxygen concentration according to the present invention is particularly advantageous because the resulting modulation frequencies are relatively low and such modulation may be accomplished with relatively inexpensive and commercially available light sources, modulators, and electrical components.

For construction of a temperature sensor according to the present invention, a fluorometric temperature sensor of natural or synthetic ruby (aluminum oxide doped with chromium ions) has a fluorescence lifetime of approximately 3.5 milliseconds at body temperature. The corresponding modulating frequency would be about 45 Hz.

The second waveform 33 (Figure 2) may be chosen to be slightly higher or lower in frequency, for instance 40,040 Hz, such that the difference (Δ) or "heterodyne frequency" is approximately 40 Hz. A particular advantage of the frequency synthesis technique described herein is that phase jitter and frequency drift in the synthesizer's common oscillator, which appear in the modulating waveform (f) 32, are substantialy eliminated by the processing of the luminescent emissions with reference to the second modulating waveform 33, and a timing reference signal 34, which contain the same "phase errors". Thus, the stability requirements and cost of the frequency synthesizer 10 is substantially reduced. The waveforms 32, 33 are shown as being approximately sinusoidal, although other waveforms such as square or trapezoidal may be used, and it is not necessary that the two waveforms have the same shape or harmonic content - a further benefit of the disclosed signal processing technique.

In this embodiment, the modulated light source 15 comprises an incandescent lamp 42 with a power supply 44 and an integral beam collimating lens 46, short wave pass filter 48, electrooptic lightbeam modulator 50, and focusing lens 52.

6

The lamp 42 produces a broad-spectrum collimated light beam, a portion of said spectrum being in the shorter-wavelength portion of the visible spectrum. The light beam is projected through the short wave pass filter 48 where the longer visible wavelengths and infrared emissions from the lamp are removed. The filter 48 is not a necessity for the operation of the invention but can improve the signal-to-noise ratio of the system. The light beam then passes through the electro-optic modulator 50 which consists of an acousto-optic cell, or more preferably a quartz crystal window, the edges of the window having two or more electrodes attached such that the modulating voltage, which is preferably chosen at the resonant frequency of the quartz window, causes a periodic variation in the light wave retardation (index of refraction) within the quartz, and a resulting substantial intensity modulation of light beam. For example, a suitable resonant fused-quartz window wave retardation modulator is Part No. 11/FSA, available from Hinds International of Portland, Oregon.

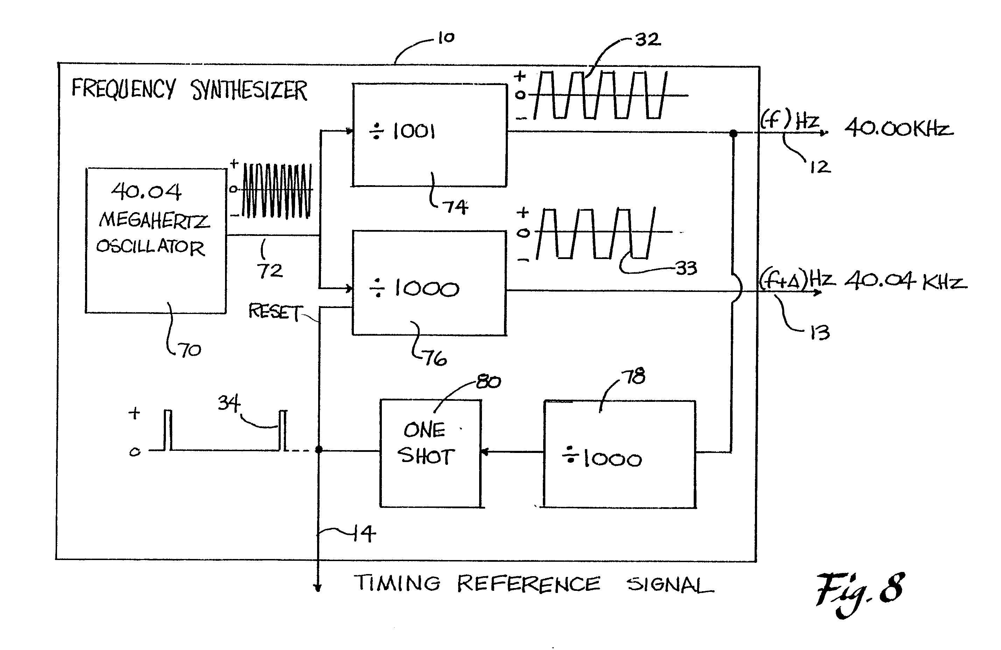

The excitation light beam is then focused to an intense spot by the focusing lens 52 and enters the fiber optic light pipe 16. The excitation light beam travels to the bi-directional coupler/connecter 17, as is best shown in Figure 6, where a portion of the excitation light is launched into the fiber-optic-equipped catheter 18. The coupler may optionally be of a "fused" type, wherein all of the components are permanently fixed into place, or of a demountable type, wherein the catheter 18 may be removed and replaced. As a third alternative, the coupler may be of a fused type, with a separate in-line fiber-optic connector 17', as illustrated in Figure 7, facilitating the replacement of the catheter 18.

As a fourth alternative, the fluorometric sensor 19 is illustrated in Figure 5 may be attached to ingoing 16' and outgoing 20' fiber optic light pipes within the catheter, illustrated in Figure 5, and two separate in-line fiber optic connectors similar to the device shown in Figure 5 may be used to couple the catheter to excitation light path 16 and luminescent return path 20, without departing from the spirit of the invention. Modulated excitation light travels to the distal tip of catheter 18 and strikes the fluorometric sensor 19, whereupon the fluorometric sensor responds with omnidirectional luminescent emissions which are a function of the modulating excitation light and the average luminescent lifetime of the sensor 19. The lifetime is substantially reduced, however, by the presence of a quencher chemical species in the environment of the sensor, and this quencher concentration determines the phase delay of the luminescent emission waveform relative to the modulating excitation waveform 32, according to the known relationship:

$$\phi = \text{Arctan}\ [2\pi f\tau]$$

wherein: $\phi$ = phase angle delay of luminescent emission waveform relative to excitation waveform, and
f = modulating frequency of excitation waveform
$\tau$ = average luminescence lifetime in the presence of a given concentration of quencher.
The average luminescent lifetime of the fluorometric sensor changes in a known and predictable way according to the lifetime of the STERN-VOLMER equation:

$$\frac{\tau_O}{\tau} = (1 + Kg\ \tau_0\ [Q])^N$$

wherein: $\tau_0$ = lifetime in absence of quencher
$\tau$ = lifetime in the presence of a given concentration of quencher
Kg = biomolecular quenching coefficient
[Q] = quencher concentration
N = linearizing coefficient

From the foregoing it can be seen that it is possible to relate the phase angle of luminescent emissions (relative to a predetermined periodic excitation waveform) to quencher concentration at the tip of the catheter. Similarly, the temperature at the tip of the catheter can be determined by the known relation:

$$\tau = \frac{a}{e^{-b/kT}}$$

Where: T = temperature in °K
a & b = constants of the material
k = Boltzmann's constant
e = natural logirithm

A portion of the luminescent emissions from the fluorometric sensor 19 are conveyed to the proximal end of the catheter 18, through the bi-directional coupler 17, and thence via the fiber optic light pipe 20 to the variable-gain photosensor 21. A long-wave pass filter 60 may optionally be used to increase the signal-to-noise ratio of the system. In this embodiment, the photosensor apparatus consists of a photomultiplier tube 62, wherein a last dynode of the tube 62 has been connected to the modulating waveform voltage 33. The photomultiplier tube current is proportional to the luminescent emission, but the current is also instantaneously modulated by the voltage appearing on the last dynode. The resultant photomultiplier tube

7

output current is accordingly related to the <u>product</u> of two signals, the waveform 33 and the luminescent emission from the sensor 19. A low-frequency "heterodyne" signal at 40 Hz (the difference between 40,000 Hz and 40,040 Hz) occurs as a component of the output current. The photomultiplyer tube output current is then passed through a narrow band-pass filter 64 to eliminate the high frequency components from the original modulating signals 32, 33. The resulting slowly-time varing signal is shown as a waveform 66 (Figure 2).

The important characteristics of this signal, for the purposes of this invention, is that this signal preserves the phase relationship of the luminescent emission relative to a timing reference signal 34, which in turn in indicative of the phase relationship between the original modulating signals. The timing reference signal 34 in this modulating embodiment is a pulse which is generated each time the two modulating waveforms simultaneously cross their midpoints, with both moving in a positive direction. The frequency synthesizer insures that this event occurs at time intervals of $1/\Delta$ where $\Delta$ is the heterodyne frequency in hertz. It is particularly easy and advantageous to generate the timing reference pulse signal each time there is coincident zero crossings of modulation waveforms 2 and 3, although other timing waveforms such as multiple pulse trains, sinusoids, trapezoids or squarewaves can also be used.

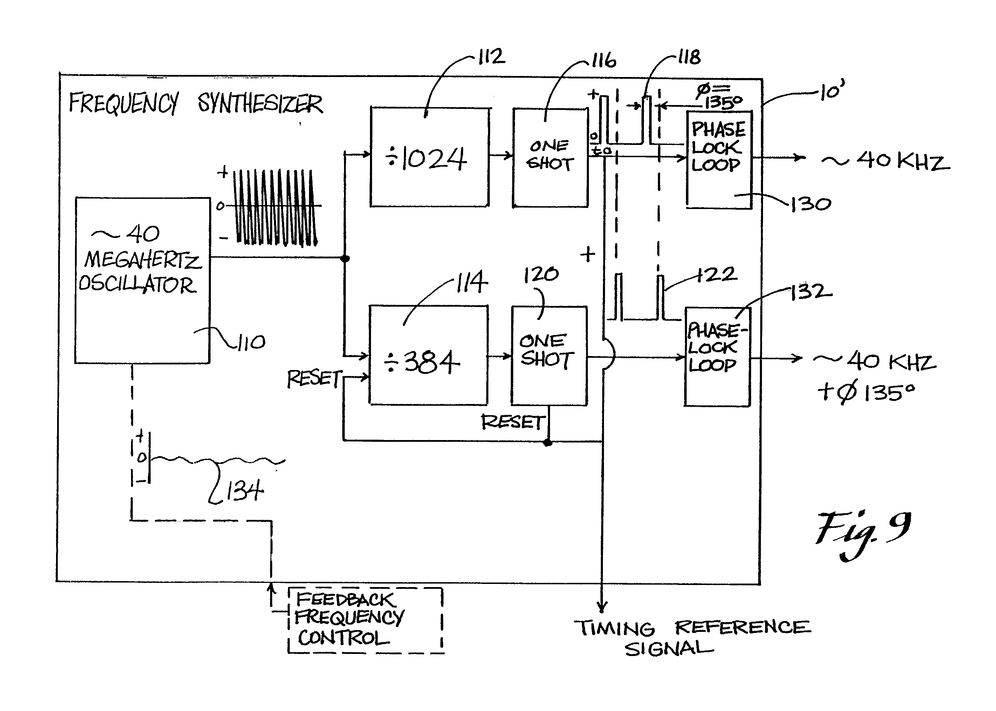

Figure 8 shows a more detailed schematic of one embodiment of a frequency synthesizer 10 capable of generating waveforms 32, 33, 34 similar to those shown in Figure 2. A high frequency oscillator 70 produces an output signal of approximately 40.04 Megahertz at an output 72. This signal is directed to two frequency dividers 74, 76. A first frequency divider 74 goes through one complete periodic cycle at its output for each 1001 cycles of the oscillator. A second frequency divider 76 goes through one complete periodic cycle at its output for each 1000 cycles of the oscillator. These functions can be created with well known digital logic components, such as oscillators, phase-lock loops, counters and gates, or alternatively by a devoted microprocessor. The first and second modulating waveforms 32, 33 (Figure 2) are created at the outputs 12, 13 of the synthesizer. A third frequency divider 78 is placed in series with the first frequency divider 74, but having the same division function as the second divider 76. The output of the third frequency divider 78 goes through one complete periodic cycle at its output for each 1001x1000, or 1,001,000 cycles of the oscillator.

A one-shot 80, generates a short pulse on each positive-going transition of the output of the divider 78. Thus, a pulse appears at the output of the one-shot 80 for each 1,001,000 cycles of the oscillator at which time the two modulating waveforms 32, 33 are also coincidentally crossing zero. To ensure perpetual synchronization of the dividers 74, 76, irrespective of counting or turn-on errors, the one-shot outout is applied to the divider 76 as a reset signal to force the waveform 33 to cross zero in coincidence with the firing of the one-shot 80. The one-shot output pulse 34 also acts as the timing reference signal indicating the condition of zero-crossing coincidence of the modulating waveforms 32, 33, which occurs with a periodicity of 1/40 seconds, or stated another way every 1,001,000 oscillator cycles. For a detailed discussion of frequency synthesis techniques, see "Digital PLL Frequency Synthesizers" by Ulrich Rohde, Prentice Hall, Englewood Cliff, NJ 07632 (1983).

Referring again to Figure 2, the timing reference signal 34, which it has been shown occurs at $t_0$, and the slow time varying signal 66 are applied to the voltage vs. time to lifetime conversion circuit 23. Since the modulating signals 32, 33 are also crossing zero at time $t_0$, the product of the two signals is zero, and were it not for the phase shift introduced by the fluorometric sensor, the slow-time-varying signal output of the photomultiplier/filter 62, 64 woul also be zero. However, the slow time varying singal 66 actually crosses through zero at a phase angle $\phi$ after $t_0$. The time interval or phase angle beteen time reference point $t_{op}$, which is indicated by the timing reference signal, and the time at which the slow varying signal 66 crosses through zero as indicative of the phase delay introduced by the lifetime of the fluorometric sensor. The circuit 23 therefore measures the time or the phase angle between $t_0$ and the zero-crossings of the slow-time-varying signal 66 and thusly determines lifetime according to the relationship(s):

$$\frac{time\ (t_0 \rightarrow t_0 + \emptyset)}{1/\Delta} \times 360° = \emptyset$$

and/or

$$\tau = \frac{\tan \emptyset}{2\pi F}$$

where

F = modulating frequency

$\tau$ = lifetime of sensor

$\phi$ = phase angle

$\Delta$ = heterodyne frequency

time ($t_0 \rightarrow t_0 + \phi$) = time from $t_0$ to first zero crossing of slow time varying signal.

Since the signal 66 is slowly varying signal, a simple zero crossing detector and counter can be used to accomplish the indicated time interval measurements with considerable precision, using one of the modulating signals as a clock for the counter, if desired. In this embodiment, best accuracy of lifetime measurements are accomplished with the modulating frequency is chosen such that the phase delay introduced by the fluorometric sensor 19 is approximately 45 degrees.

The output of the voltage vs. time to lifetime conversions circuit 23 is a signal representative of the lifetime of the fluorometric sensor. This signal is conveyed to a lifetime to fluid concentration conversion circuit 25. This circuit 25 relates the lifetime of the sensor to quencher concentration or temperature according to the relationships described above, or modifications thereof to compensate for sensor non-linearities.

If the fluorometric sensor 19 is designated to measure oxygen fluid concentration, but is also sensitive to temperature changes, the circuit 25 can also compensate for temperature effects by adjusting the numerator of the STERN-VOLMER equation (i.e., $t_0$, the lifetime in the absence of quencher) to a temperature corrected value indicative of the current sensor operating temperature. Although not disclosed in the prior art, it is usually necessary to also adjust the biomolecular quenching coefficient and the linearization coefficients in the STERN-VOLMER equation with changes in temperature. This is due to changes in gas solubility and permeability of the polymer substrate with temperture.

The operating temperature of the fluorometric sensor may be determined by a second fluorometric sensor 82 for temperature, a thermocouple, or a thermistor temperature sensor housed in the same catheter, or alternatively the temperature of the body may be estimated by a separate temperature monitor and entered manually into the system. Finally, the temperature-compensated oxygen concentration value is displayed on a display 26.

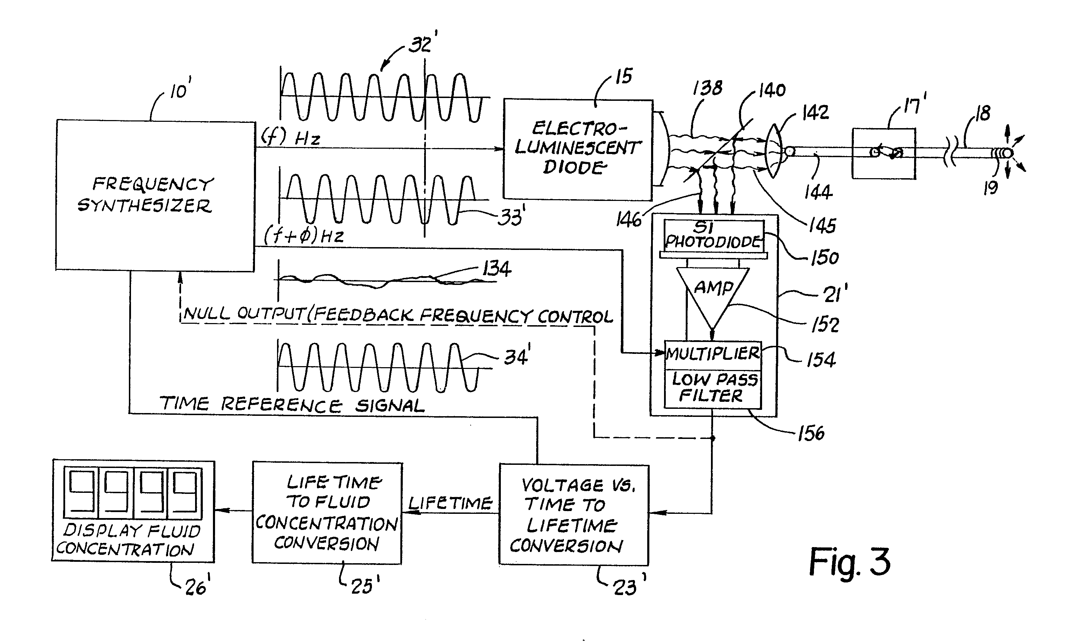

Turning now to Figure 3, a detailed schematic of a second embodiment of the invention is shown. The frequency synthesizer 10' generates two periodic, modulating waveforms (f)Hz, 32'; and (f + $\phi$)Hz, 33'. In this embodiment, the heterodyne frequency difference ($\Delta$) has been reduced to zero-i.e., the frequencies of the two modulating waveforms are identical. However, a constant phase differential $\phi$ has been introduced between the two waveforms by the synthesizer 10'. For use with an organometallic oxygen sensor - (fluorometric sensor) according to the present invention, this modulating frequency f may again be approximately 40,000Hz, for the reasons previously described, and the phase difference between the two modulating waveforms, $\phi$ = 135° for reasons to be later described. The timing reference signal output 34' of the synthesizer 10' is a periodic signal related to the modulating frequency f.

A detailed schematic diagram of a frequency synthesizer 10' capable of generating waveforms of the approximate form shown in Figure 3 is shown in Figure 9. The output of an oscillator 110, having approximately a 40 megahertz oscillation rate, is directed in parallel to two frequency dividers 112, 114. The output of the first divider 112, is directed through a one shot 116 which provides a short output pulse 118 every 1024 oscillator cycles. This short pulse 118 in turn is used to enable the second frequency divider 114 and a second one shot 120, the combination of which provides a second output pulse 122 which consistently lags the first output pulse 118 by 384 oscillator cycles. After releasing the pulse 122, the second divider 114 and one shot 120, are inactive until they are reset by the receipt of a new pulse 118. Therefore it can be seen that the second output pulse 122 will always lag the first output pulse 118 by 384 oscillator counts but will occur once in every 1024 oscillator cycles, since it is enabled (synchronized to) the first output pulse 118. Thus, the phase lag $\phi$ is pretermined by the relationship between the two dividers as follows:

$$\phi' = \frac{384}{1024} \times 360° = 135°$$

Any other fixed phase relationship $\phi$ between the two signals can be obtained by simply adjusting the ratio of the two dividers 112, 114. In addition, if it is desirable to produce sinusoidal-type waveforms at the modulating outputs of the synthesizer 10', when phase-lock loops 130, 132 may be placed in series with the modulating ouputs. The characteristics of these phase lock loops 130, 132 is that their outputs 32, 33 will follow faithfully the phase and repetition rates of the pulses 118, 122 but can convert these assymetrical pulsed waveforms 118, 122 to ones which are sinusoidal in nature. In this embodiment, the pulse 118 can

9

also be conveniently used at the timing reference signal 34, or any other available signal indicative of the modulating frequency may be used. As shall later be described, a null output/frequency feedback control signal 134 may be optionally employed in this embodiment to vary the oscillator frequency around 40 KHz where it is desirable to operate the fluorometric sensor at a constant phase angle $\phi$ relative to the modulating signal f.

Returning now to Figure 3, the first modulating waveform 32' is applied to and modulates a light source 15, which in this embodiment is shown to be an electroluminescent diode (LED). This LED may be a SEIMENS CORP. Model #LDB5410, which produces blue light suitable for excitation of fluorometric sensors according to the present invention. Alternatively, a gas discharge tube, a laser diode, or laser with intensity modulation capabilities having light output in the upper portion of the visible spectrum may be employed. The LED or Laser Diode are particularly advantageous because of their small size and high efficiency.

The modulated light output of the LED, 15 is directed via a first light path 138 to a beam splitter 140. The beam splitter 140 has the characteristics of passing short wavelength light which strikes it. The blue light from the LED 15 passes through the splitter 140 through a focusing lens 142 and into proximal end of an interconnecting light pipe 144, whereupon it is conveyed to the fluorometric sensor 19 via a fiber optic connector 17' (best shown in Figure 7) and catheter 18.

The modulated excitation light from LED 15, upon striking the fluorometric sensor 19, causes luminescent emissions which are indicative of the modulation characteristics of the exciting light source and of the fluorescence lifetime of the fluorometric sensor, as earlier described. A portion of these luminescent emissions are conveyed via the catheter 18, fiber optic connector 17', interconnecting light pipe 144, and focusing lens 142 to the beam splitter 140, which has the characteristic that only the long wavelength fluorescent emissions striking it from a light path 145 are reflected along a light path 146, thereby striking the variable-gain photosensor 21'. In this embodiment, the variable-gain photosensor 21' comprises a silicon photodiode 150, current amplifier 152, a multiplier amplifier 154, such as Motorola Part No. 1495, and a low pass filter 156. The second modulation waveform 33' is also applied to the multiplier 154. The multiplier 154 has the characteristic that the instantaneous voltage at its output is the product of the time-varying signal received from amplifier 152 (Figure.3) and the second modulating waveform 33'. The output of the multiplier 154 is then filtered to remove high frequency components. A resulting slow time varying signal and a timing reference signal 34', are supplied to the voltage vs. time to lifetime conversion circuit 23. Since, as earlier described, the two modulating signals 32' and 33' have a common modulating frequency and a fixed phase relationship, the average voltage value at the output of the low pass filter 156 is representative of the phase shift introduced by the fluorometric sensor 19. If, for instance, the modulating frequency (f) = 40,000Hz, and the fluorescence lifetime of the sensor for a specified oxygen (quencher) concentration = 4 microseconds, then:

$$\phi_F = \text{Arctan} [2\pi F\tau]$$
$$\phi_F = \text{Arctan} [6.28 \ (40\text{x}10^3) \ (4\text{x}10^{-3})]$$
$$\phi_F = \text{Arctan} \ 1.0 = 45°$$

For the specified conditions, the phase angle, $\phi_F$ added to the first modulating signal by the fluorometric sensor as it appears at the output of amplifier 152 would therefore be 45°. If $\phi$, the phase angle of the second modulating signal 33' relative to the first is then set at 135° as earlier proposed, then:

$$\phi - \phi_F = 135° - 45° = 90°$$

This is a special condition, because the product, integrated over one or more cycles, of any two symetrical ac signals of the same frequency having a phase difference of 90° or 270° will have an average value of zero. Therefore, for the conditions specified, the output of the low pass filter 156 would have an average value of zero. If however, the lifetime of the fluorometric sensor should increase due to a decrease in oxygen concentration, the phase $\phi$ introduced by the sensor would increase and the phase difference would become less than 90°. The average value of the signal at the output of the low pass filter 156 would then become positive. In a similar manner, if the lifetime of the fluorometric sensor should decrease due to an increase in oxygen concentration, the phase $\phi_F$ introduced by the sensor would decrease and the phase difference would become more than 90°. The average value of the signal at the output of the low pass filter 156 would then become negative. In this emobdiment, then, the variations in average value of the slow time varying signal can be measured and correlated in voltage vs. time to lifetime conversion circuit 23' to changes in oxygen concentration at the tip of the cathether 18. Any variations in the oscillator modulating frequency 32' which might otherwise cause an error in the readings can likewise be accommodated by the monitoring of the timing reference signal 34', in the voltage vs. time to lifetime conversion circuit 23'. Changes in the modulating frequency 32' would affect the zero point at the output of the low pass filter 156 with respect to a specific $\phi_F$ and $\tau$. It is also possible to choose different output voltage to oxygen concentration relationships than described by choosing different values of $\phi$.

As an alternative to allowing the average voltage at the output of the low pass filter 156 to vary above and below zero with changes in $\phi_F$ and $\tau$, it is highly advantageous to operate the variable-gain photosensor 21' in a continuous zero output or <u>NULL</u> condition, with a constant phase difference between the fluorescent return signal and the second modulating signal of 90°. This can be accomplished if it is recalled that tan $\phi_F = 2\pi F$

but if $\phi = 135°$, and $\phi_F = 45°$, then:

tan 45° = 1 = $2\pi F\tau$

this expression implies that only one combination of modulating frequency 32' and sensor lifetime will result in an exact phase difference of 90° and a "null" output from the variable gain photosensor apparatus 21'. It is therefore possible to use the output of the low pass filter 156 to provide a closed-loop feedback frequency control signal 134, which works in the following manner.

As the florescence lifetime of the sensor 19 increases due to a reduction in oxygen concentration at the tip of the catheter 18, the phase angle $\phi_F$ increases and the phase difference decreases below 90°. The average value of the signal at the output of the lowpass filter 156 increases. This increasing signal is used to increase the operating freqency of the oscillator 110 (Figure 9), which causes modulating frequency 32' to increase. The increased modulation frequency 32' is therefore established at a new level where the phase difference has returned to 90° because the senor lifetime and the modulating frequency have combined to produce a $\phi_F = 45°$ as explained in the relationship above. Decreases in sensor lifetime are accommodated by the feedback frequency control in a similar but opposite manner. This is a particularly advantageous operating mode for the Figure 3 embodiment because the apparatus has its maximum sensitivity to fluorescent signal phase changes (i.e., sensor lifetime changes) with a phase difference of 90° and a "null" output signal from the variable gain photosensor 21'. When the feedback frequency control signal 134 is optionally employed and the apparatus is operated at a constant phase $\phi_F = 45°$, the lifetime of the sensor is determined by analysis of the timing reference signal 34' during the time that the average output of the low pass filter 156 is zero in the voltage vs. time to lifetime conversion circuit 23' according to the following relationship:

$$\tau = \frac{\tan \phi_F}{2 \pi F}$$

but tan $\phi_F = 1$, so

$$\tau = \frac{1}{2 \pi F}$$

Therefore, lifetime $\tau$ becomes a reciprocal function of the modulating frequency F, as represented in the timing reference signal 34', and as adjusted and controlled by the feedback frequency control signal 134.

Regardless of which of the above-described methods are chosen for analysis of the slow-time varying output from the photosensor 21' and the timing reference signal 34', the voltage vs. time to lifetime conversion circuit 23' produces an output signal which is functionally related to the lifetime of the fluorometric sensor.

The lifetime to fluid concentration conversion circuit 25' and the display 26' operate as hereinbefore described, converting the lifetime signal to a display of fluid concentration or temperature at the tip of the catheter 18.

It will be undersood that the above specific descriptions and drawings have been given for the purposes of illustration only and that variations, modifications, and other combinations of the illustrations and specifications herein described can be made by those skilled in the art without departing from the spirit and scope of the appended claims.

## Claims

1. A measurement system for analysis of fluid components or temperature inside a body, comprising:
frequency synthesizer means for generating first and second periodic, modulating waveforms, said waveforms being of the same frequency but having a constant phase difference;
a light source which is capable of being modulated by said first modulation waveform, and of directing a portion of its output to the distal portion of a fiber optic light pipe-equipped catheter;
a fiber-optic equipped catheter having at least its distal portion located in an organ or a body in which fluid component concentration or temperature is to be measured, said catheter having at least one fluorometric sensor deployed to sense fluid concentration or temperature, said fluorometric sensor being in communication with one or more fiber optic light pipes within said catheter, said fluorometric sensor producing luminescent emissions in response to the incident light from the modulated light source, said luminescent emission being indicative of the fluid concentration or temperature in the region of the fluorometric sensor, and a portion of said luminescent emissions being directed to the proximal end of said catheter;
variable-gain photosensor means responsive to the second waveform to modulate a strength of response to said luminescent emissions and produce a time-varying output signal;
conversion means for analyzing the time-varying signal from the photosensor means in conjunction with a timing reference signal supplied by said frequency synthesizer means to produce a lifetime signal functionally related to the lifetime of the fluorometric sensor and to convert the lifetime of the fluorometric sensor to fluid concentration or temperature in the region of the fluorometric sensor; and
display means to display fluid concentration or temperature in the region of the fluorometric sensor.

2. The apparatus of Claim 1 wherein said luminescent emissions of said fluorometric sensor are maintained at a constant phase angle relative to the modulated light source excitation light waveform by controlling the light source modulating frequency, said control being accomplished by analyzing a characteristic of the output signal of the variable-gain photosensor apparatus and developing a feedback signal which is used to control the frequency of the modulating waveforms.

3. The apparatus of Claim 2 wherein said feedback signal is developed by analyzing a time vs. voltage characteristic of the output signal of the variable gain photosensor apparatus.

4. The apparatus of Claim 2 wherein said lifetime signal is functionally related to the modulating frequency of said light source.

5. The apparatus of Claim 1 wherein said modulating waveforms are derived from a common oscillator within said frequency synthesizer means.

6. The apparatus of Claim 2, wherein said feedback frequency control signal is used to control a common oscillator within said frequency synthesizer means, the modulating waveforms being derived from said common oscillator.

7. A measurement system for analysis of fluid components or temperature inside a body, comprising:
frequency synthesizer means for generating first and second periodic, modulating waveforms, said waveforms having a constant frequency difference, and said frequency synthesizer also generating a timing reference signal which is indicative of the relationship between the modulating waveforms;
a light source which is capable of being modulated by said first modulating waveform, and of directing a portion of its output to the distal portion of a fiber optic light pipe-equipped catheter;
a fiber-optic equipped catheter having at least its distal portion location in an organ or a body in which fluid component concentration or temperature is to be measured, said catheter having at least one fluorometric sensor deployed to sense fluid concentration or temperature, said fluorometric sensor being in communication with one or more fiber optic light pipes within said catheter, said fluorometric sensor producing luminescent emissions in response to the incident light from the modulation light source, said luminescent emissions being indicative of the fluid concentration or temperature in the region of the fluorometric sensor, and a portion of said luminescent emissions being directed to the proximal end of said catheter;
variable-gain photosensor means for sensing luminescent emissions from the proximal end of said catheter, wherein a characteristic strength of response to said luminescent emissions is modulated by said second modulating waveform to produce a time-varying output signal;
conversion means for analyzing said time-varying signal in conjunction with said timing reference signal to produce a lifetime of the fluorometric sensor, and for relating said lifetime to the fluid concentration or temperture in the region of the fluorometric sensor; and
display means to produce a display of fluid concentration or temperature in the region of the fluorometric sensor.

8. The apparatus of Claim 1 or 7, wherein said fluorometric sensor's luminescent lifetime is sensitively and substantially modified by the presence of oxygen, the hydrogen ion, or a change in ambient temperature.

9. The apparatus of Claim 8, wherein said fluorometric sensor consists of a fluorophor/polymer matrix.

10. The apparatus of Claim 9, wherein said fluorometric sensor comprises a luminescent organometallic compound copolymerized, dissolved, or diffused into a polymer plastic.

11. The apparatus of Claim 10, wherein said luminescent organometallic compound is tris (4, 7 diphenyl 1,10 phenathroline) Ruthenium II complex ion, or fluoroesceinamine.

12. The apparatus of Claim 9, wherein said polymer is chosen from the group: silicon rubber, a copolymer of silicon and polycarbonate, or a copolymer of silicon and polystyrene, or an ion exchange resin.

13. The apparatus of Claim 8, wherein said fluorometric sensor comprises a natural or synthetic ruby.

14. The apparatus of Claim 1 or 7, wherein conversion means converts the lifetime of said fluorometric sensor to said fluid concentration by a functional relationship which compensates for variations in the temperature of said fluorometric sensor.

15. The apparatus of Claim 14, wherein said temperature variations are determined by placing a temperature sensor in a proximate relationship to said fluorometric sensor, and thereby providing a temperature compensating signal for use by said conversion means.

16. The apparatus of Claim 15, wherein said temperature sensor is a fluorometric sensor.

Fig.1

Fig. 2

Fig. 3

0 259 973

LUMINESCENT EMISSIONS

SOURCE EXCITATION LIGHT

19

*Fig. 4*

16'

LUMINESCENT EMISSIONS

19

SOURCE EXCITATION LIGHT

20'

*Fig. 5*

16          17          18

SOURCE EXCITATION LIGHT

LUMINESCENT EMISSIONS

SOURCE EXCITATION LIGHT
LUMINESCENT EMISSIONS

20

*Fig. 6*

17'          18

*Fig. 7*

FREQUENCY SYNTHESIZER

40.04 MEGAHERTZ OSCILLATOR

÷ 1001

÷ 1000

RESET

ONE SHOT

÷ 1000

(f) Hz, 40.00 KHz

(f+∆) Hz 40.04 KHz

TIMING REFERENCE SIGNAL

Fig. 8

Fig. 9